# EUROPÄISCHE PATENTSCHRIFT

(11) **EP 2 010 768 B1**
(45) Veröffentlichungstag und Bekanntmachung des Hinweises auf die Patenterteilung: **27.07.2011**
(21) Anmeldenummer: 07727420.7
(22) Anmeldetag: 28.03.2007
(51) Int. Cl.: F01N 3/20

(54) **BEHEIZBARES SCHLAUCHLEITUNGSSYSTEM FÜR ABGASNACHBEHANDLUNGSANLAGEN VON BRENNKRAFTMASCHINEN**
HEATABLE HOSE LINE SYSTEM FOR EXHAUST GAS AFTERTREATMENT UNITS IN INTERNAL COMBUSTION ENGINES
SYSTÈME DE CONDUITES FLEXIBLES CHAUFFABLE D'INSTALLATIONS DE RETRAITEMENT DES GAZ D'ÉCHAPPEMENT DE MOTEURS À COMBUSTION INTERNE

(30) Priorität: 13.04.2006 DE 102006017399
(43) Veröffentlichungstag der Anmeldung: 07.01.2009
(73) Patentinhaber: ContiTech Techno-Chemie GmbH, 61184 Karben (DE)
(72) Erfinder: BEHRENDT, Waldemar, 63486 Bruchköbel (DE); KIRSCH, Christof, 61194 Niddatal (DE)
(74) Vertreter: Finger, Karsten
(86) Internationale Anmeldenummer: PCT/EP2007/052947
(87) Internationale Veröffentlichungsnummer: WO 2007/118772

(56) Entgegenhaltungen:
- EP-A- 1 698 769
- EP-A- 1 770 251
- WO-A-03/016687
- DE-A1- 19 935 920
- DE-U1- 20 119 513

## Beschreibung

Die Erfindung betrifft eine Vorrichtung zur Abgasnachbehandlung einer Brennkraftmaschine gemäß den Merkmalen des Oberbegriffs des Patentanspruches 1.

Vorrichtungen zur Abgasnachbehandlung einer Brennkraftmaschine sind aus der DE 199 35 920 A1, der WO 03/016687 A, der DE 201 19 513 U1, der EP-A-1 698 769 und der EP-A-1 770 251 bekannt.

Zur Verminderung von Stickoxidemissionen einer Brennkraftmaschine ist es bekannt, mit Hilfe der Selectiv-Catalytic-Reduktions-Technologie (SCR) Stickoxid in Luftstickstoff und Wasserdampf umzuwandeln. Als Reduktionsmittel wird wässerige Harnstofflösung verwandt, die in einem separaten Vorratsbehälter mitgeführt wird. Die wässrige Harnstofflösung wird aus dem Vorratsbehälter über ein Fördermodul bzw. eine Pumpe herausgefördert und einem Dosiermodul zugeführt, von dem die Harnstofflösung dosiert in den Abgasstrom vor dem Katalysator eingespritzt wird. Überschüssiges Reduktionsmittel wird von dem Fördermodul über einen Rücklauf zurück in den Vorratsbehälter geleitet.

Zwischen dem Vorratsbehälter, dem Fördermodul und dem Dosiermodul sind Schlauchleitungen zur Förderung des Reduktionsmittels vorhanden. Diese Schlauchleitungen müssen mit den genannten Aggregaten zur Herstellung der Fluidverbindung verbunden werden. Dafür haben sich so genannte Steckverbindungen als vorteilhaft herausgestellt, da sie die Montage vereinfachen. Das jeweilige Schlauchende wird mit einem Vatersteckteil oder Muttersteckteil ausgerüstet, das mit einer entsprechenden Steckeraufnahme am fluidmäßig zu verbindenden Aggregat zusammenpasst.

Die Schlauchleitungen zwischen Vorratsbehälter und der Abgasleitung müssen beheizbar sein, da die Gefahr des Einfrierens der wässrigen Harnstofflösung ab minus 11 °C besteht. Es ist bekannt, die Gefahr des Einfrierens durch elektrisch beheizbare Schläuche abzuwenden. Obwohl diese elektrisch beheizbaren Schläuche sich bewährt haben, sind Anwendungsfälle vorhanden, in denen diese technische Lösung nicht greifen kann, wenn z.B. zu wenig elektrische Leistung vorhanden ist.

Es ist auch möglich, zu jeder Reduktionsmittel führenden Schlauchleitung eine Heizwasser führende Schlauchleitung paarig in enger Nachbarschaft wärmeabgebend anzuordnen. Das Heizwasser erwärmt die es führende Schlauchleitung, die aufgrund ihrer engen Nachbarschaftsanordnung die Wärmeenergie auf die die Harnstofflösung führende Schlauchleitung transferiert. Als Heizwasser kann aus dem Kühlwasserkreislauf der Brennkraftmaschine abgezweigtes temperiertes Kühlwasser verwendet werden.

Mit dieser mindestens ein Schlauchleitungspaar bildenden Anordnung ist das Einfrieren der Harnstofflösung in den Schlauchleitungen weitestgehend verhindert. Die Einfriergefahr in den Steckverbindungen selbst bleibt bestehen. Weiter ist die erhöhte Anzahl von Steckverbindungen nachteilig, da die Heizwasser führenden Schlauchleitungen innerhalb ihres Kreislaufes ebenfalls an Aggregate anzuschließen sind.

Der Erfindung liegt die Aufgabe zugrunde, eine Vorrichtung der eingangs geschilderten Art zu schaffen, die einen Einfrierschutz der wässrigen Harnstofflösung auch in den Anschlüssen der Schlauchleitungen an den zu verbindenden Aggregaten ermöglicht.

Die Aufgabe wird erfindungsgemäß durch die Merkmale im Kennzeichen des Patentanspruchs 1 gelöst.

Jeweils ein Harnstoffschlauch wird mit einem Heizwasserschlauch zusammengeführt und dadurch beheizt. Diese beiden Schläuche enden dann in einem gemeinsamen Anschlussblock, der derart ausgebildet ist, dass das Heizwasser durch ihn durchgespült wird, während die Harnstofflösung im Aggregat endet. Das hat den Vorteil, dass nicht nur die Schläuche, sondern auch die Anschlussteile der Schlauchleitungen, hier die Anschlussblöcke, aufgetaut werden. Diese Anschlussblöcke sind aus einem Harnstoff beständigen Metall gelötet, wodurch die Wärmeleitfähigkeit erheblich gesteigert werden ist. Ferner sind die an dem jeweiligen Anschlussblock angebrachten Schlauchnippel als eingelötete Rohrstutzen ausgebildet.

Für das Anschließen an die Aggregate sind die Anschlussblöcke mit Steckverbindern ausgestattet. Die Anschlüsse der Heizwasserleitungen stellen die Verbindung von Vor- und Rücklauf dar.

Der Steckverbinder des jeweiligen Anschlussblockes kann entweder als männliches oder weibliches Steckerteil ausgebildet werden, das in eine entsprechende Steckverbindungsaufnahme an dem jeweiligen Aggregat zusammenpasst.

Durch die vorteilhaften Ausgestaltungen gemäß den Ansprüchen 4 und 5 werden die Endverbindungsbereiche des jeweiligen Anschlussblockes vollständig geschützt.

Durch die beheizbaren Anschlussblöcke ist der gesamte Leitungszweig der Harnstofflösung von dem Vorratsbehälter bis zur Abgasleitung mit einer durchgehenden direkten Beheizbarkeit ausgestattet. Eine Kältebrücke innerhalb des Leitungszweiges ist nicht mehr vorhanden.

Anhand der Zeichnung werden nachstehend zwei Ausführungsbeispiele der Erfindung näher erläutert. Es zeigt
- Fig. 1: in schematischer und streckenmäßig unterbrochener Darstellung ein die Harnstoff- und Heizwasserleitungen führendes Strangprofil, das paarig aufgeteilt an Anschlussblöcken eines Aggregates einer Reduktionsmittelanlage endet,
- Fig.2: in perspektivischer Ansicht einen Anschlussblock mit einem männlichen Steckverbinder, der in ein am Aggregat angebrachtes Mutterteil einsteckbar und fixierbar ist,
- Fig. 2a: in schematischer Darstellung zwei am Aggregat befestigte Mutterteile,
- Fig. 3: einen Längsschnitt durch den Anschlussblock in der Ebene der Durchflussbohrungen,
- Fig. 4: eine Vorderansicht des Anschlussblocks unter Darstellung der unsichtbaren Durchflussbohrungen,
- Fig. 5 und: Fig. 6 das am Aggregat fest angeordnete Mutterteil zur Aufnahme des Vatersteckteils des Anschlussblocks in zwei Ansichten,
- Fig. 7: eine die beiden ineinander zusteckenden Teile sichernde U-Feder,
- Fig. 8: einen Anschlussblock, dessen beide Eingangsschlauchnippel von einer Abdeckklappe abgedeckt sind,
- Fig. 9: eine modifizierte Ausführungsform eines mit dem Aggregat zu verbindenden Anschlussblockes, der ein mütterliches Steckverbindungsteil aufweist,
- Fig. 10: eine Explosionsdarstellung des in Fig. 9 gezeigten Anschlussblockes.

In einem aus elastomerem Material hergestellten Strangprofil 5 mit kreisförmigem Umfang sind vier Schlauchleitungen 6,7,8 und 9 in entsprechende Umfangsausnehmungen des

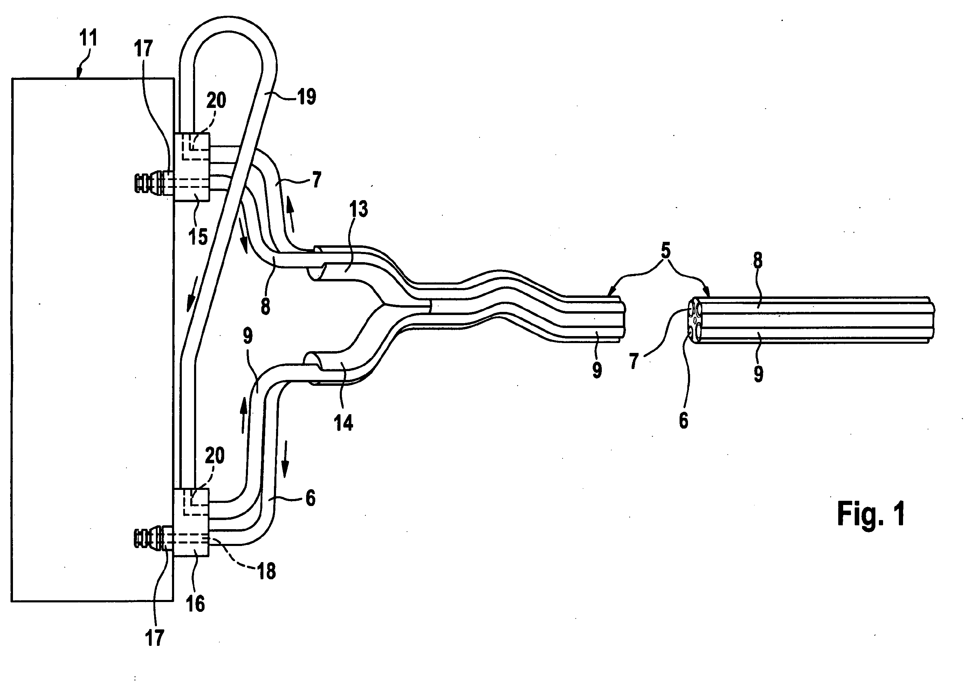

Strangprofils 5 eingeklipst (Fig. 1 ). Die Schlauchleitungen 6,7,8 und 9 sind mit ihrem einen Ende mit einem hier nicht gezeigten Reduktionsmittelvorratsbehälter (Tank) verbunden. Die Schlauchleitungen 6 und 8 bilden eine Vorlauf- und eine Rücklaufleitung für die Harnstofflösung. Die zwischen ihnen eingeklipsten Schlauchleitungen 7 und 9 führen Heizwasser und bilden eine Vorlauf- und eine Rücklaufleitung für das Heizwasser.

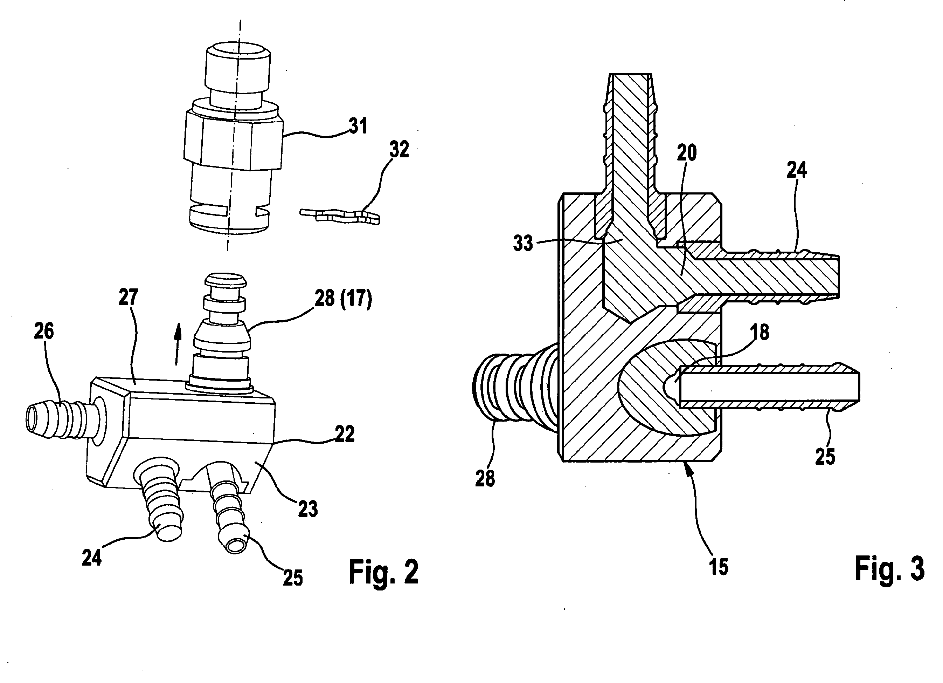

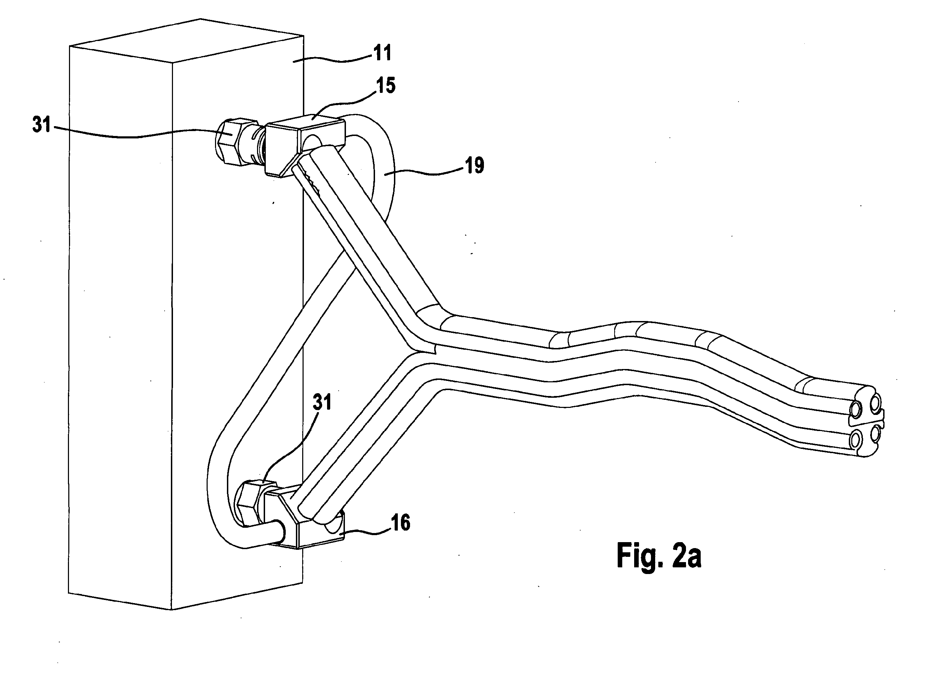

Die Schlauchleitungen 6,7,8, und 9 verlaufen mit dem Strangprofil 5 zu einem schematisch dargestellten Fördermodul 11, von dem die benötigte Menge Harnstofflösung zum nicht gezeigten Dosiermodul befördert wird. Dabei ist das Strangprofil 5 in kurzem Abstand vor dem Fördermodul 11 axial in zwei Zweige 13 und 14 aufgetrennt. Jeder Zweig 13 bzw. 14 enthält dadurch ein Schlauchleitungspaar 6,9 bzw. 8,7 aus einer Harnstoffleitung und einer Heizwasserleitung. Jedes Schlauchleitungspaar 6,9 bzw. 8,7 ist an seinem Ende mit einem Anschlussblock 15 bzw. 16 verbunden, der auf seiner den Schlauchenden entgegengesetzten Fläche einen Steckverbinder 17 mit männlichem Steckerteil 28 (Fig. 2) aufweist, der in das Aggregat, hier das Fördermodul 11 eingesteckt ist. Der Anschlussblock 15 stellt über einen Durchflusskanal 18 so eine Fluidverbindung für den Harnstoffvorlauf und der Anschlussblock 16 stellt so eine Fluidverbindung für den Hamstoffrücklauf mit dem Fördermodul 11 dar.

Die jeweils einen Durchflusskanal 20 für das Heizwasser aufweisenden Anschlussblöcke 15 bzw. 16 werden über einen Heizwasserschlauch 19 miteinander verbunden.

Das von der Schlauchleitung 7 herangeführte. Heizwasser wird in dem Anschlussblock 15 radial umgelenkt und über die Verbindunasschlauchleitung 19 zu dem anderen Anschlussblock 16 geführt, tritt dort ein und verlässt es über die den Heizwasserrücklauf bildende Schlauchleitung 9. Heizwasser und Harnstofflösung strömen in dem Leitungssystem somit in entgegengesetzter Richtung. In anderen Anwendungsfällen ist es auch möglich, die Heizwirkung über in gleicher Richtung strömende Medien zu erreichten.

Der in Fig. 2 gezeigte Anschlussblock 15 ist im Wesentlichen als Quader ausgebildet, wobei die Frontseite 22 eine abgeschrägte Vorderfläche 23 aufweist. Aus dieser abgeschrägten Vorderfläche 23 ragen zwei Schlauchnippel 24 und 25 hervor, auf die die Enden eines hier nicht gezeigten Schlauchleitungspaares aus Heizwasser- und Harnstoffschlauchleitungen aufgeschoben und befestigt werden. Seitlich ist ein weiterer Schlauchnippel 26 angebracht, auf dem ein einen Rücklauf bildender, hier nicht gezeigter Heizwasserschlauch aufsteckbar und sicherbar ist. Auf der Deckfläche 27 des Quaders 15 ist ein mit einer zentralen Bohrung versehenes männliches Steckerteil 28 angebracht, das in ein am schematisch in Fig. 2a gezeigten Gehäuse des Aggregates 11 befestigtes Mutterteil 31 einsteckbar und über eine U-förmige Sicherungsfeder 32 arretierbar ist.

Wie aus Fig. 3 ersichtlich ist, ist der Schlauchnippel 24 des Heizwasseranschlusses in einen Durchflusskanal 20 im Anschlussblock eingesetzt und eingelötet. Der Durchflusskanal 20 verläuft innerhalb des Anschlussblockes 15 rechtwinklig bis zu einer Ausgangsöffnung 33, in der der Schlauchnippel 26 für den Rücklauf des Heizwassers eingesetzt ist. Parallel neben dem ersten Schlauchnippel 24 ist der Schlauchnippel 25 für die die Harnstofflösung führende Schlauchleitung eingesetzt und fluchtet mit einem Durchflusskanal 18, der in einem stumpfwinkligen Verlauf in einer Auslassöffnung endet, in der das männliche Steckerteil 28 eingesetzt ist.

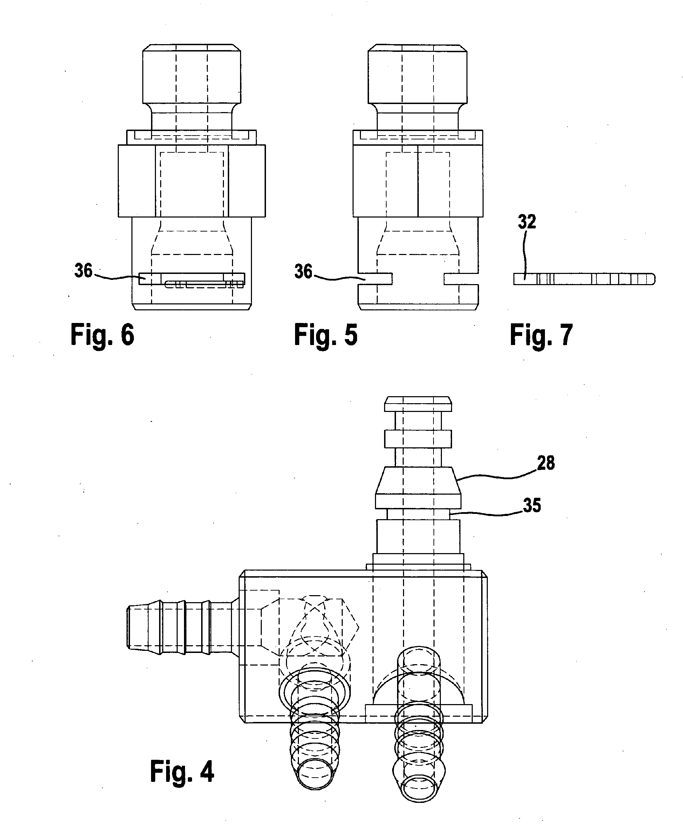

Die Anordnung der Schlauchnippel 24, 25 und 26 und des männlichen Steckerteils 28 und der Verlauf der sie verbindenden Durchflusskanäle 18 und 20 wird schematisch aus der Fig. 4 ersichtlich, wobei die Durchflusskanäle 18 und 20 in gestrichelten unsichtbaren Kanten dargestellt sind.

In den Figuren 5 und 6 wird das am Fördermodulgehäuse 11 angeordnete Mutterteil 31 zur Aufnahme des männlichen Steckerteils 28 dargestellt. Nach einem Einstecken des Steckerteils 28 in das Mutterteil 31 decken sich eine umlaufende Nut 35 des männlichen Steckerteils 28 und beidseitig parallel angebrachte Schlitzöffnungen 36 im Mutterteil 31, so dass unter Einschieben einer U-förmigen Sicherungsfeder 32 die beiden Teile 28 und 31 miteinander verriegelbar sind.

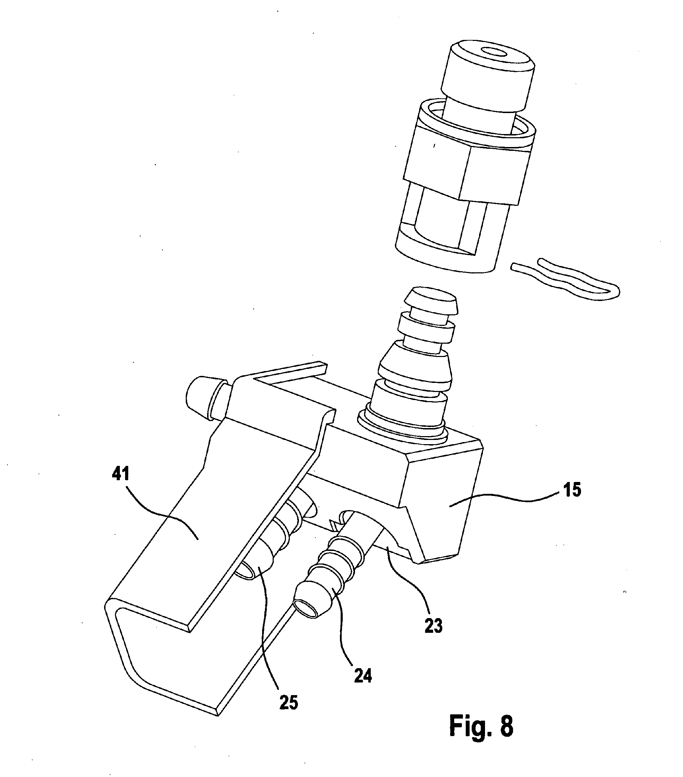

In der Fig. 8 wird eine auf den Anschlussblock 15 aufklipsbare halbe Abdeckklappe 41 gezeigt, die sich über den Eingangsschlauchnippel 24 erstreckt. Eine hier nicht gezeigte zweite aufklipsbare Abdeckklappe führt zu einem vollständigen Schutz der Endverbindungsbereiche an der schrägen Fläche 23 des Anschlussblockes 15.

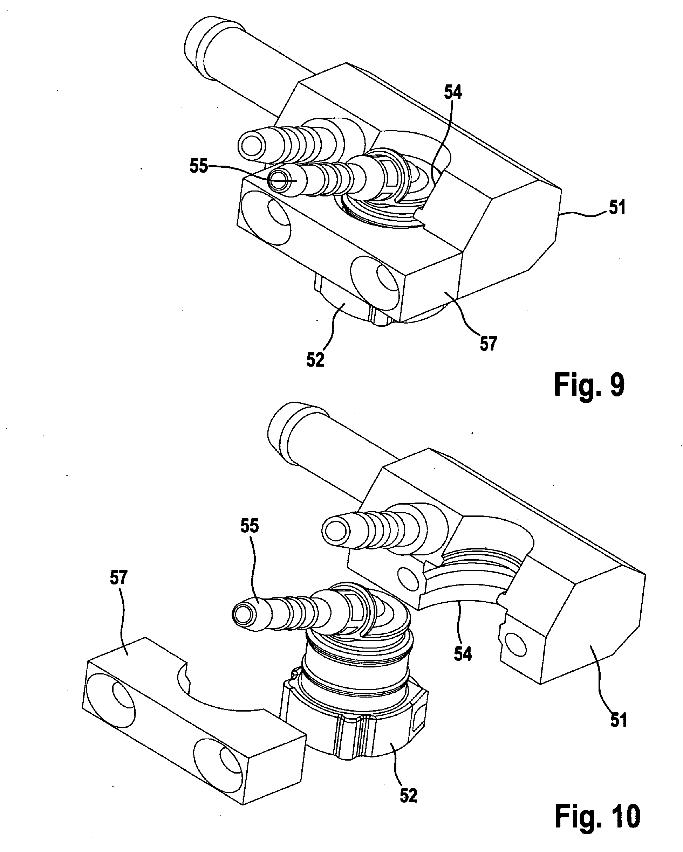

Der in den Figuren 9 und 10 gezeigte modifizierte Anschlussblock 51 weist als Steckverbinder ein mütterliches Steckerteil 52 auf, das auf ein väterliches Steckteil, das an dem jeweiligen zu verbindenden Aggregat vorhanden ist, aufgesteckt und gesichert wird. Dazu ist das weibliche Steckerteil 52 in eine Ausnehmung 54 des Hauptkörpers 51 eingesetzt. Zur Sicherung dieses durchgehend zum Schlauchnippel 55 geführten mütterlichen Steckerteils 52 wird ein Haltebalken 57 an den Hauptkörper 51 unter Einschluss des mütterlichen Steckerteils 52 angeschraubt.

### Bezugszeichenliste

- 5: Strangprofil
- 6: Schlauchleitung, Harnstofflösung
- 7: Schlauchleitung, Heizwasser
- 8: Schlauchleitung, Harnstofflösung
- 9: Schlauchleitung, Heizwasser
- 11: Fördermodul
- 13: Strangprofilzweig
- 14: Strangprofilzweig
- 15: Anschlussblock
- 16: Anschlussblock
- 17: Steckverbinder
- 18: Durchflußkanal, Harnstofflösung
- 19: Heizwasserschlauch
- 20: Durchflusskanal, Heizwasser
- 22: Frontseite
- 23: Abgeschrägte Vorderfläche
- 24: Schlauchnippel
- 25: Schlauchnippel
- 26: Schlauchnippel
- 27: Deckfläche
- 28: Männliches Steckerteil
- 31: Mutterteil
- 32: Sicherungsfeder
- 33: Ausgangsöffnung
- 35: Umlaufende Nut
- 36: Schlitzöffnungen
- 51: Anschlussblock
- 52: Weibliches Steckerteil
- 54: Ausnehmung
- 55: Schlauchnippel
- 57: Haltebalken

## Patentansprüche

1. Vorrichtung zur Abgasnachbehandlung mittels der selektiven katalytischen Reduktion von Stickoxiden aus dem Abgas einer Brennkraftmaschine durch Einbringen eines flüssigen Reduktionsmittels in das Abgas der Brennkraftmaschine mit einem das Reduktionsmittel aufnehmenden Reduktionsmittelbehälter, einer Reduktionsmittelpumpe zum Fördern des Reduktionsmittels, einem Dosiermodul mit Dosierventil zum Einspritzen des Reduktionsmittels in den Abgasstrom vor dem Reduktiönskatalysator und einer beheizbaren Reduktionsmittelleitung zwischen den genannten Aggregaten Reduktionsmittelbehälter, Reduktionsmittelförderpumpe und dem Dosiermodul, wobei zu jeder Reduktionsmittel führenden Schlauchleitung (6;8) eine Heizwasser führende Schlauchleitung (7;9) paarig in enger Nachbarschaft wärmeabgebend angeordnet ist.
**dadurch gekennzeichnet,**
**dass** mindestens ein Schlauchleitungspaar (6,7 bzw. 8,9) mit mindestens einem Ende gemeinsam an einem einen Steckverbinder (17, 52) aufweisenden Anschlussblock (15,16 bzw. 51) endet, der einen Durchflußkanal (18) für die Harnstofflösung zum Inneren des zu verbindenden Aggregats (11) und einen Durchflußkanal (20) für das Heizwasser aufweist, und
**dass** der Durchflußkanal (20) für das Heizwasser einen außerhalb des Aggregates (11) liegenden Auslass (33) aufweist, und
**dass** die an dem jeweiligen Anschlussblock (15 bzw. 51) angebrachten Schlauchnippel (24,25, 55) eingelötete Rohrstutzen sind und dass die Anschlussblöcke (15,16 bzw. 51) aus einem harnstoffbeständigen Metall bestehen.

2. Vorrichtung nach Anspruch 1, **dadurch gekennzeichnet,**
**dass** der Steckverbinder (17) ein männliches Steckerteil ist.

3. Vorrichtung nach Anspruch 1, **dadurch gekennzeichnet, dass** der Steckverbinder (52) ein weibliches Steckerteil ist.

4. Vorrichtung nach Anspruch 1, **dadurch gekennzeichnet, dass** der die Eingangsschlauchnippel (24,25) aufweisende Bereich des Anschlussblockes (15) durch eine oder mehrere Abdeckkappen (41) abgedeckt ist.

5. Vorrichtung nach Anspruch 1, **dadurch gekennzeichnet, dass** die Abdeckkappen (41) auf den Anschlussblock (15) aufklipsbar sind.

## Claims

1. Device for exhaust-gas aftertreatment by means of the selective catalytic reduction of nitrogen oxides from the exhaust gas of an internal combustion engine by introducing a liquid reducing agent into the exhaust gas of the internal combustion engine, having a reducing agent reservoir which holds the reducing agent, having a reducing agent pump for feeding the reducing agent, having a dosing module with a dosing valve for injecting the reducing agent into the exhaust-gas flow upstream of the reduction catalytic converter, and having a heatable reducing agent line between said units the reducing agent reservoir, the reducing agent feed pump and the dosing module, with a hose line (7;9) which conducts heating water being arranged, in a paired fashion, in close proximity to each hose line (6;8) which conducts reducing agent so as to dissipate heat to the latter,
**characterized**
**in that** at least one hose line pair (6,7 and 8,9) terminates together at at least one end at a connection block (15,16 and 51) which has a plug-type connector (17;52), a throughflow duct (18), for the urea solution, to the interior of the unit (11) which is to be connected, and a throughflow duct (20) for the heating water, and
**in that** the throughflow duct (20) for the heating water has an outlet (33) which is situated outside the unit (11), and
**in that** the hose nipples (24, 25, 55) which are attached to the respective connection block (15 and 51) are soldered-in pipe stubs, and in that the connection blocks (15, 16 and 51) are composed of a metal which is resistant to urea.

2. Device according to Claim 1, **characterized in that** the plug-type connector (17) is a male plug part.

3. Device according to Claim 1, **characterized in that** the plug-type connector (52) is a female plug part.

4. Device according to Claim 1, **characterized in that that** region of the connection block (15) which has the inlet hose nipple (24,25) is covered by one or more covering caps (41).

5. Device according to Claim 1, **characterized in that** the covering caps (41) can be clipped onto the connection block (15).

## Revendications

1. Dispositif de post-traitement des gaz d'échappement par réduction catalytique sélective des oxydes d'azote des gaz d'échappement d'un moteur à combustion interne, en apportant un agent réducteur liquide dans les gaz d'échappement du moteur à combustion interne, le dispositif présentant
un récipient à agent de réduction qui reprend l'agent de réduction,
une pompe à agent de réduction qui transporte l'agent de réduction,
un module de dosage doté d'une soupape doseuse qui injecte l'agent de réduction dans l'écoulement de gaz d'échappement en amont du catalyseur de réduction et d'un conduit chauffé d'agent de réduction situé entre lesdits ensembles que sont le récipient d'agent de réduction, la pompe de transport d'agent de réduction et le module de dosage,
un tuyau flexible (7; 9) conduisant de l'eau chaude étant apparié à proximité étroite d'échange de chaleur avec chaque conduit flexible (6; 8) amenant l'agent de réduction,
**caractérisé en ce que**
au moins une extrémité d'au moins une paire (6, 7 ou 8, 9) de conduits flexibles se termine conjointement sur un bloc de raccordement (15, 16 ou 51) qui présente un raccord enfichable (17, 52), un canal de passage (18) pour la solution d'urée vers l'intérieur de l'ensemble (11) à relier et un canal de passage (20) pour l'eau chaude,
**en ce qu'**une sortie (33) du canal de passage (20) pour l'eau chaude est située à l'extérieur de l'ensemble (11),
**en ce que** les mamelons (24, 25, 55) de tuyau flexible placés sur chaque bloc de raccordement (15 ou 51) sont des tubulures brasées et
**en ce que** les blocs de raccordement (15, 16 ou 51) sont constitués d'un métal qui résiste à l'urée.

2. Dispositif selon la revendication 1, **caractérisé en ce que** le raccord enfichable (17) est un raccord enfichable mâle.

3. Dispositif selon la revendication 1, **caractérisé en ce que** le raccord enfichable (52) est un raccord enfichable femelle.

4. Dispositif selon la revendication 1, **caractérisé en ce que** la partie du bloc de raccordement (15) qui présente le mamelon (24, 25) de conduit flexible d'entrée est recouvert par un ou plusieurs capuchons de recouvrement (41).

5. Dispositif selon la revendication 1, **caractérisé en ce que** les capuchons de recouvrement (41) peuvent être encliquetés sur le bloc de raccordement (15).
